# EUROPÄISCHE PATENTANMELDUNG

(11) **EP 3 498 100 A1**
(43) Veröffentlichungstag der Anmeldung: **19.06.2019**
(21) Anmeldenummer: 18202774.8
(22) Anmeldetag: 15.01.2013
(51) Int. Cl.: A23C 9/133, A23C 9/156, A23C 21/08, A23L 3/015, A23L 3/3418, A23L 3/3445, A23B 7/152, B65B 31/00, A23L 5/10, A23C 7/04

(54) **VERFAHREN ZUM HERSTELLEN EINER LEBENSMITTELKONSERVE AUS MILCH-, OBST- UND/ODER GEMÜSEPRODUKTEN**

(30) Priorität: 18.01.2012 DE 102012000808
(62) Teilanmeldung aus: 13000210.8
(71) Anmelder: Hipp & Co, 6072 Sachseln (CH)
(72) Erfinder: Tomusch, Frithjof, Gmunden (AT)
(74) Vertreter: Schiweck Weinzierl Koch Patentanwälte Partnerschaft mbB

(57) **Zusammenfassung**

Die Erfindung betrifft ein Verfahren zur Herstellung einer Lebensmittelkonserve aus Milch-, Obst- und/oder Gemüseprodukten, bei dem die Produkte zuerst gemischt und dann abgefüllt werden, und eine Lebensmittelkonserve aus Milch-, Obst- und/oder Gemüseprodukten, bei der die Produkte gemischt und abgefüllt sind.

## Beschreibung

Die Erfindung betrifft ein Verfahren zum Herstellen einer Lebensmittelkonserve aus Milch-, Obst- und/oder Gemüseprodukten, bei dem die Produkte zuerst gemischt und dann abgefüllt werden, und eine Lebensmittelkonserve aus Milch-, Obst- und/oder Gemüseprodukten, bei der die Produkte gemischt und abgefüllt sind.

Lebensmittelkonserven aus Milch-, Obst- und/oder Gemüseprodukten werden als sterile Konserven im Markt angeboten. Durch eine Abfüllung in möglichst sauerstofffreier Atmosphäre wird eine lange Haltbarkeit bei hoher Produktqualität erreicht. Eine höhere Produktqualität kann dadurch erzielt werden, dass nur eine geringere Mindesthaltbarkeitsdauer angegeben wird oder in dem die Konserven in einer Kühlkette ausgeliefert werden und im Kühlregal angeboten werden.

Der Erfindung liegt die Aufgabe zu Grunde, die Produktqualität derartiger Konserven insbesondere auch im Rahmen einer längeren Mindesthaltbarkeitsdauer besonders hoch zu halten.

Diese Aufgabe wird verfahrensmäßig bei einem gattungsgemäßen Verfahren dadurch gelöst, das während des Mischens und des Abfüllens der Restsauerstoffgehalt der die Produkte umgebenden Atmosphäre auf unter 5 % abgesenkt ist.

Der Erfindung liegt die Erkenntnis zu Grunde, dass die Produktqualität einer Konserve nicht nur durch die lange Lagerung beeinträchtigt wird, sondern eine wesentliche Qualitätssteigerung bereits bei der Herstellung der Konserve erzielt werden kann. Dies wird dadurch erreicht, dass nicht nur während und nach dem Abfüllen der Restsauerstoffgehalt der die Produkte umgebenden Atmosphäre minimiert wird, sondern bereits in den vorgeschalteten Verfahrensschritten auf eine minimale Belastung der behandelte Produkte geachtet wird. Das heißt, dass bei einer Kaltzubereitung bereits das Mischen der Ausgangsprodukte bei minimaler Sauerstoffbelastung durchgeführt wird. Vorzugsweise wird die gesamte Prozesskette der der Abfüllung vorangehenden Bearbeitungsschritte ab Zulieferung der Ausgangsprodukte bei einem minimierten Restsauerstoffgehalt durchgeführt.

Es hat sich herausgestellt, dass die Produktqualität besonders dadurch erhöht wird, dass der Restsauerstoffgehalt auf unter 1 % abgesenkt wird. Die besten Ergebnisse wurden jedoch erzielt, in dem der Restsauerstoffgehalt auf unter 0,1 % abgesenkt wurde.

Für die Herstellung von gekochten Konserven wird vorgeschlagen, dass die Produkte zwischen dem Mischen und Abfüllen gekocht werden und der Restsauerstoffgehalt auch beim Kochen abgesenkt bleibt. Dabei kann auch während des Kochens gemischt werden.

Sofern die Produkte nicht bereits ausreichend zerkleinert zugeliefert werden wird vorgeschlagen, dass die Obst- und/oder Gemüseprodukte zerkleinert werden und der Restsauerstoffgehalt auch beim Zerkleinern abgesenkt bleibt.

Die Verfahrensschritte Zerkleinern, Mischen, Kochen und Abfüllen müssen dabei nicht nacheinander durchgeführt werden, sondern die Zeiten der einzelnen Verfahrensschritte können sich auch überschneiden. Außerdem können die Verfahrensschritte an unterschiedlichen Orten und zu unterschiedlichen Zeiten durchgeführt werden. Zur Erhöhung der Produktqualität sollte jedoch darauf geachtet werden, dass die Produkte weder während der Verfahrensschritte noch zwischen den Verfahrensschritten einer Atmosphäre mit nicht abgesenktem Restsauerstoffgehalt ausgesetzt werden.

Die Absenkung des Restsauerstoffgehaltes kann durch Evakuieren der die Produkte aufnehmenden Behältnisse erzielt werden. Dies können insbesondere für den Transport an die Produkte anliegende Folien sein. Während der Bearbeitungsschritte sind dies in der Regel evakuierbare Behälter, in denen zerkleinert, gemischt oder gekocht werden kann. diese Behälter müssen nicht zwangsläufig während des Bearbeitungsschrittes unter Vakuum stehen, sondern sie können nach der Evakuierung auch mit Dampf oder oxidationsträge Schutzgasen, wie Stickstoff, Kohlendioxid und/oder Edelgasen gefüllt werden. Dies führt dazu, dass die Produkte während der jeweiligen Bearbeitungsschritte von einer Atmosphäre von Dampf oder oxidationsträgen Schutzgasen umgeben sind. Dies erlaubt es sogar in den Behandlungsbehältern einen geringen Überdruck entstehen zu lassen, um zu verhindern, dass sauerstoffhaltige Luft in den Behälter eindringt.

Ein besonders bevorzugtes Verfahren sieht daher vor, dass die Produkte in einer druckfesten Chargen-Koch-Mischanlage gemischt und erhitzt werden. Dies erleichtert die Behandlung der Produkte unter Sauerstoffausschluss.

Um einen definierten Restsauerstoffgehalt in der das Produkt umgebenden Atmosphäre sicher zu stellen, werden folgende Verfahrensschritte vorgeschlagen:
a) Evakuieren der Produkte auf mehr als 500 mbar Unterdruck bei einer Produkttemperatur von unter 70 °C,
b) Vollständiger Abbau des Unterdrucks durch Einblasen von Stickstoff, Dampf oder einem oxidationsträgen Schutzgas,
c) Messen des Restsauerstoffgehaltes in der die Produkte umgebenden Atmosphäre,
d) je nach Restsauerstoffgehalt null- oder mehrmalige Wiederholung der Prozessschritte a) bis c) bis ein Zielwert erreicht wird.

Im Verfahrensschritt c) ist darauf zu achten, dass nach dem Evakuieren und dem anschließenden Rückbegasen einige Zeit verstreichen muss um einen Konzentrationsausgleich zwischen den Produkten und der die Produkte umgebenden Atmosphäre zu erzielen. Diese Zeit liegt unter 5 min und sollte so eingestellt sein, dass in dieser Konzentrationsausgleichszeit mindestens ein 95 %-iger und vorzugsweise sogar ein 99 %-iger Konzentrationsausgleich erzielt wird. Dieser Konzentrationsausgleich ist sinnvoll um den Evakuierungs- und Rückbegasungszyklus zu steuern. Eine Konzentrationsausgleichszeit, die mindestens 0,5 Minuten dauern sollte ermöglicht es, den Sauerstoff aus dem Produkt entweichen zu lassen bevor eine weitere Evakuierung und eine erneute Begasung beginnt. Die Messung sollte daher vorzugsweise beispielsweise erst nach 0,5 Minuten und spätestens 5 Minuten nach Einblasen des Stickstoffs, des Dampfes oder des oxidationsträgen Gases durchgeführt werden.

Eine praktikable Verfahrensführung bei hoher Produktqualität wird dadurch erzielt, dass das Produkt auf unter 850 mbar Unterdruck bei einer Produkttemperatur von unter 25 °C evakuiert wird. Eine verbesserte Produktqualität wird jedoch bereits dadurch erreicht, dass das Produkt auf unter 500 mbar Unterdruck bei einer Produkttemperatur von unter 70 °C evakuiert wird.

In der Praxis ist es besonders vorteilhaft, wenn die Produkte in einer druckfesten Chargen-Koch-Mischanlage mit maximal 1.000 kg, vorzugsweise maximal 300 kg Chargengröße evakuiert werden.

In einem Ausführungsbeispiel werden 200 bis 300 kg Produkte in eine druckfeste Chargen-Koch-Mischanlage gegeben. Anschließend wird die Koch-Mischanlage evakuiert, sodass der Unterdruck im Behälter bei etwa 1.000 mbar liegt. Die Produkttemperatur liegt dabei bei etwa 20 °C. Anschließend wird in den Behälter Stickstoff eingeblasen, bis ein geringer Überdruck entsteht. Drei Minuten nach dem Einblasen des Stickstoffs wird der Restsauerstoffgehalt in der die Produkte umgebenden Atmosphäre gemessen. Sofern ein Restsauerstoffgehalt von 0,1 % noch nicht erreicht wird, wird erneut evakuiert und Stickstoff zugegeben, bis der geforderte Restsauerstoffgehalt von 0,1 % erreicht ist. Erst dann wird gemischt und gekocht.

Nach dem Kochen wird durch das Weiterleiten des Produktes in Rohren zur Abfüllanlage dafür gesorgt, dass die das Produkt umgebende Atmosphäre weiterhin bei unter 1 % Restsauerstoffgehalt liegt. Verbesserte Produktergebnisse wurden bereits durch eine geringe Absenkung des Restsauerstoffgehaltes während der Abfüllung erzielt.

Die Erfindung wird ferner durch die folgenden Ausführungsformen beschrieben:
1. Verfahren zum Herstellen einer Lebensmittelkonserve aus Milch-, Obst- und/oder Gemüseprodukten, bei dem die Produkte zuerst gemischt und dann abgefüllt werden, dadurch gekennzeichnet, dass während des Mischens und des Abfüllens der Restsauerstoffgehalt der die Produkte umgebenden Atmosphäre auf unter 5 % abgesenkt ist.
2. Verfahren nach Ausführungsform 1, dadurch gekennzeichnet, dass der Restsauerstoffgehalt auf unter 1 %, vorzugsweise unter 0,1 %, abgesenkt ist.
3. Verfahren nach Ausführungsform 1 oder 2, dadurch gekennzeichnet, dass die Produkte zwischen dem Mischen und dem Abfüllen gekocht werden und der Restsauerstoffgehalt auch beim Kochen abgesenkt bleibt.
4. Verfahren nach einer der vorhergehenden Ausführungsformen, dadurch gekennzeichnet, dass die Obst- und/oder Gemüseprodukte zerkleinert werden und der Restsauerstoffgehalt auch beim Zerkleinern abgesenkt bleibt.
5. Verfahren nach einer der vorhergehenden Ausführungsformen, dadurch gekennzeichnet, dass die die Produkte umgebende Atmosphäre von Dampf oder oxidationsträgen Schutzgasen, wie Stickstoff, Kohlendioxid und/oder Edelgasen, gebildet wird.
6. Verfahren nach einer der vorhergehenden Ausführungsformen, dadurch gekennzeichnet, dass die Produkte in einer druckfesten Chargen-Koch-Mischanlage gemischt und erhitzt werden.
7. Verfahren nach einer der vorhergehenden Ausführungsformen, gekennzeichnet durch die folgenden Verfahrensschritte:
   a) Evakuieren der Produkte auf mehr als 500 mbar Unterdruck bei einer Produkttemperatur von unter 70 °C,
   b) Vollständiger Abbau des Unterdrucks durch Einblasen von Stickstoff, Dampf oder einem oxidationsträgen Schutzgas,
   c) Messen des Restsauerstoffgehaltes in der die Produkte umgebenden Atmosphäre,
   d) je nach Restsauerstoffgehalt null- oder mehrmalige Wiederholung der Prozessschritte a) bis c) bis ein Zielwert erreicht wird.
8. Verfahren nach einer der vorhergehenden Ausführungsformen, bei dem das Produkt auf unter 850 mbar Unterdruck bei einer Produkttemperatur von unter 25 °C evakuiert wird.
9. Verfahren nach einer der vorhergehenden Ausführungsformen, dadurch gekennzeichnet, dass die Produkte in einer druckfesten Chargen-Koch-Mischanlage mit maximal 1.000 kg, vorzugsweise maximal 300 kg Chargengröße evakuiert werden.
10. Lebensmittelkonserve aus Milch-, Obst- und/oder Gemüseprodukten, bei der die Produkte gemischt und abgefüllt sind, dadurch gekennzeichnet, dass der Restsauerstoffgehalt der die Produkte umgebenden Atmosphäre in der Konserve auf unter 1 %, vorzugsweise unter 0,1 %, abgesenkt ist.

## Patentansprüche

1. Verfahren zum Herstellen einer Lebensmittelkonserve aus Milch-, Obst- und/oder Gemüseprodukten, bei dem die Produkte zuerst gemischt und dann abgefüllt werden, **dadurch gekennzeichnet, dass** während des Mischens und des Abfüllens der Restsauerstoffgehalt der die Produkte umgebenden Atmosphäre auf unter 5 % abgesenkt ist.

2. Verfahren nach Anspruch 1, **dadurch gekennzeichnet, dass** die Produkte zwischen dem Mischen und dem Abfüllen gekocht werden und der Restsauerstoffgehalt auch beim Kochen abgesenkt bleibt.

3. Verfahren nach Anspruch 1 oder 2, **dadurch gekennzeichnet, dass** die Obst- und/oder Gemüseprodukte zerkleinert werden und der Restsauerstoffgehalt auch beim Zerkleinern abgesenkt bleibt.

4. Verfahren nach einem der vorhergehenden Ansprüche, **dadurch gekennzeichnet, dass** der Restsauerstoffgehalt auf unter 1 %, vorzugsweise unter 0,1 %, abgesenkt ist.

5. Verfahren nach einem der vorhergehenden Ansprüche, **dadurch gekennzeichnet, dass** die Absenkung des Restsauerstoffgehaltes durch Evakuieren der die Produkte aufnehmenden Behältnisse erzielt wird.

6. Verfahren nach Anspruch 5, **dadurch gekennzeichnet, dass** die Behältnisse nach dem Evakuieren mit oxidationsträgen Schutzgasen gefüllt werden.

7. Verfahren nach Anspruch 6, **dadurch gekennzeichnet, dass** ein geringer Überdruck in den Behandlungsbehältern entsteht.

8. Verfahren nach Anspruch 5, **dadurch gekennzeichnet, dass** die Behältnisse während des Bearbeitungsschrittes unter Vakuum stehen.

9. Verfahren nach einem der vorhergehenden Ansprüche, **dadurch gekennzeichnet, dass** die die Produkte umgebende Atmosphäre von Dampf oder oxidationsträgen Schutzgasen, wie Stickstoff, Kohlendioxid und/oder Edelgasen, gebildet wird.

10. Verfahren nach einem der vorhergehenden Ansprüche, **dadurch gekennzeichnet, dass** das Produkt auf unter 500 mbar Unterdruck bei einer Produkttemperatur von unter 70 °C evakuiert wird.

11. Verfahren nach einem der vorhergehenden Ansprüche, **dadurch gekennzeichnet, dass** die Produkte in einer druckfesten Chargen-Koch-Mischanlage gemischt und erhitzt werden.

12. Verfahren nach einem der vorhergehenden Ansprüche, **gekennzeichnet durch** die folgenden Verfahrensschritte:
a) Evakuieren der Produkte auf mehr als 500 mbar Unterdruck bei einer Produkttemperatur von unter 70 °C,
b) Vollständiger Abbau des Unterdrucks durch Einblasen von Dampf oder einem oxidationsträgen Schutzgas,
c) Abwarten, um einen Konzentrationsausgleich zwischen den Produkten und der die Produkte umgebenden Atmosphäre zu erzielen,
d) Messen des Restsauerstoffgehaltes in der die Produkte umgebenden Atmosphäre,
e) je nach Restsauerstoffgehalt null- oder mehrmalige Wiederholung der Prozessschritte a) bis d) bis ein Zielwert erreicht wird.

13. Verfahren nach einem der vorhergehenden Ansprüche, **dadurch gekennzeichnet, dass** das Produkt auf unter 850 mbar Unterdruck bei einer Produkttemperatur von unter 25 °C evakuiert wird.

14. Verfahren nach einem der vorhergehenden Ansprüche, **dadurch gekennzeichnet, dass** die Produkte in einer druckfesten Chargen-Koch-Mischanlage mit maximal 1.000 kg, vorzugsweise maximal 300 kg Chargengröße evakuiert werden.

15. Verfahren nach einem der vorhergehenden Ansprüche, **dadurch gekennzeichnet, dass** das Mischen während des Kochens stattfindet.

16. Lebensmittelkonserve aus Milch-, Obst- und/oder Gemüseprodukten erhältlich durch das Verfahren nach den vorhergehenden Ansprüchen 1-15, **dadurch gekennzeichnet, dass** der Restsauerstoffgehalt der die Produkte umgebenden Atmosphäre in der Konserve auf unter 1 %, vorzugsweise unter 0,1 %, abgesenkt ist.
